(19) **Europäisches Patentamt**
**European Patent Office**
**Office européen des brevets**

(11) **EP 4 321 492 A1**

(12) **EUROPEAN PATENT APPLICATION**
published in accordance with Art. 153(4) EPC

(43) Date of publication:
**14.02.2024 Bulletin 2024/07**

(21) Application number: **22784677.1**

(22) Date of filing: **05.04.2022**

(51) International Patent Classification (IPC):
*C03C 3/087* (2006.01)  *B09B 3/40* (2022.01)
*C03C 13/06* (2006.01)  *C04B 14/42* (2006.01)

(52) Cooperative Patent Classification (CPC):
**B09B 3/40; C03C 3/087; C03C 13/06; C04B 14/42;**
**Y02W 30/91**

(86) International application number:
**PCT/JP2022/017119**

(87) International publication number:
**WO 2022/215695 (13.10.2022 Gazette 2022/41)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **06.04.2021 JP 2021064565**

(71) Applicant: **Nippon Fiber Corporation**
**Abiko-City Chiba 270-1162 (JP)**

(72) Inventors:
• **FUKAZAWA, Hiroshi**
  **Abiko-City Chiba 2701162 (JP)**
• **UWATOKO, Yoshiya**
  **Nagareyama-City, Chiba 2700111 (JP)**

(74) Representative: **Mewburn Ellis LLP**
**Aurora Building**
**Counterslip**
**Bristol BS1 6BX (GB)**

(54) **ALKALI-RESISTANT NONCRYSTALLINE INORGANIC COMPOSITION AND FIBER THEREOF**

(57)     [Object] A high value-added material having excellent alkali resistance is developed by effectively utilizing waste material discharged from coal-fired power plants and copper slag discharged from copper smelters.

[Solution] With regard to a non-crystalline inorganic composition containing silica ($SiO_2$), iron oxide ($Fe_2O_3$), alumina ($Al_2O_3$), and calcium oxide (CaO) as main components, when i) a total content of silica, alumina, and calcium oxide is set to be 50% by mass or more and 75% by mass or less; ii) a content of iron oxide is set to be 26% by mass or more and less than 40% by mass; and iii) iron oxide is derived from a non-crystalline raw material, an inorganic composition that can be melt-spun and has excellent alkali resistance is obtained. In this inorganic composition, most of the raw materials can be derived from coal ash and copper slag.

[Fig. 2]

**Description**

TECHNICAL FIELD

The present invention relates to an alkali-resistant non-crystalline inorganic composition and a fiber thereof. More particularly, the invention relates to an alkali-resistant non-crystalline inorganic composition and a fiber thereof, which effectively utilize waste of coal-fired power plant.

BACKGROUND ART

After the Great East Japan Earthquake, the operation of nuclear power generation was restricted. As a result, the proportion occupied by thermal power generation in the energy supply in Japan has remained high. Among thermal power generation, coal-fired power generation is prevailing. In coal-fired power generation, large amounts of coal ash (fly ash and clinker ash) are generated as waste. Effective use of coal ash is mostly as an aggregate for concrete, such as by mixing with cement (see, for example, Patent Document 1).
Copper slag, which has been mainly used as an aggregate for concrete, is another industrial waste for which other application has been sought.

CITATION LIST

PATENT DOCUMENT

Patent Document 1: WO 2018/008513 A

NON-PATENT DOCUMENT

Non-Patent Document 1: International Journal of Textile Science, 2012, 1(4):19-28

SUMMARY OF THE INVENTION

PROBLEM TO BE SOLVED BY THE INVENTION

Generally, concrete exhibits high alkalinity with a pH value (pH) of 12 to 13. This is because minerals (for example, calcium, silicon, aluminum, and iron) included in cement, which is a raw material (binding material) of concrete, react with water (hydration reaction), and calcium hydroxide ($Ca(OH)_2$) is produced. As described above, since concrete exhibits high alkalinity, the aggregate and other materials that are mixed with cement are required to have high alkali-resistance. However, as far as the inventors aware, no sufficient studies have been conducted so far to further enhance the alkali resistance of aggregate. In addition, it seems that efforts have not been properly made to develop high value-added materials that go beyond the category of aggregate.
Thus, the present inventors conducted thorough studies for the purpose of developing a new high value-added material that uses industrial waste such as coal ash and copper slag as main raw materials.

MEANS FOR SOLVING THE PROBLEM

As a result, the present inventors found that a non-crystalline inorganic composition containing silica ($SiO_2$), iron oxide ($Fe_2O_3$), alumina ($Al_2O_3$), and calcium oxide (CaO) as main components, in which i) a total content of silica, alumina, and calcium oxide is 50% by mass or more and 75% by mass or less; ii) a content of iron oxide is 26% by mass or more and less than 40% by mass; and iii) the iron oxide is derived from a non-crystalline raw material, has highly excellent alkali resistance and can be processed into fibers, thus completing the present invention.
The invention will be described in detail below.
The inorganic composition of the invention uses inorganic oxides as raw materials and is obtained by melting and solidifying the raw materials. Accordingly, no substantial difference can be seen between the component ratio in a blended mixture of raw materials and the component ratio in the material obtained after melting the mixture. Therefore, the component ratio in the blended mixture can be the inorganic composition component ratio that is finally obtained.
The inorganic composition of the invention is a non-crystalline inorganic composition containing silica ($SiO_2$), iron oxide ($Fe_2O_3$), alumina ($Al_2O_3$), and calcium oxide (CaO) as main components. When even a small quantity of a crystalline phase is produced in an inorganic composition, it becomes easier for alkaline substances to penetrate through the interface between a crystalline phase and a non-crystalline phase, resulting in a decrease in alkali resistance. In this regard, the inorganic composition of the invention is non-crystalline and has excellent alkali resistance.

In the invention, the determination of whether an inorganic composition is non-crystalline was based on the X-ray diffraction (XRD) pattern. That is, a case in which only a non-crystalline halo was observed while peaks of a crystalline phase were not observed in the X-ray diffraction (XRD) pattern of an inorganic composition, was determined to be non-crystalline.

It is necessary that the inorganic composition of the invention contains silica, alumina, calcium oxide, and iron oxide in specific ranges. Incidentally, in the following description, the content of a component is a value calculated in terms of oxide.

The total content of silica, alumina, and calcium oxide included in the inorganic composition of the invention is 50% by mass or more and 75% by mass or less. Among the above-described components, silica and alumina evenly disperse the iron oxide component in the inorganic composition, making the inorganic composition more likely to be non-crystalline, and perform a function of maintaining favorable spinnability of a molten material even when the iron oxide content in the inorganic composition is increased. Therefore, the total content of silica and alumina in the inorganic composition is preferably 40% by mass or more, more preferably 50% by mass or more, and most preferably 60% by mass or more. Furthermore, in order to further enhance the spinnability of the molten material, the mass ratio occupied by alumina in the sum of silica and alumina is preferably 0.15 to 0.40.

Calcium oxide affects the melt viscosity of the inorganic composition. The content of calcium oxide in the inorganic composition is preferably 5% by mass or more and 20% by mass or less.

Next, it is necessary that the content of iron oxide in the inorganic composition of the invention is 26% by mass or more and less than 40% by mass, and that this iron oxide component is derived from a non-crystalline raw material.

When the content of iron oxide is less than 26% by mass, the alkali resistance is decreased. The content of iron oxide is preferably 28% by mass or more, and most preferably 30% by mass or more.

On the other hand, when the content of iron oxide is 40% by mass or more, melt spinnability is deteriorated. The content of iron oxide is preferably 38% by mass or less, and more preferably 35% by mass or less.

Incidentally, as described above, it is essential that iron oxide is derived from a non-crystalline raw material. The non-crystalline raw material according to the invention is a non-crystalline material containing silica, alumina, calcium oxide, and iron oxide as essential components. The non-crystalline raw material is preferably such that the total content of silica, alumina, calcium oxide, and iron oxide is preferably 80% by mass or more, and more preferably 90% by mass or more. Any one of industrial products, industrial waste, and natural products can be used as the non-crystalline raw material. From the viewpoint of economic efficiency, the non-crystalline raw material is preferably industrial waste but is not limited to this.

Examples of the industrial waste that satisfies the above-described requirements include copper slag and coal ash. Coal ash also includes slag discharged from thermal power plants that employ an Integrated coal Gasification Combined Cycle method (IGCC slag).

In addition, examples of the natural products include basalt and volcanic ash.

In addition to these, iron oxide can be artificially melted and solidified together with silica, alumina, and calcium oxide to form a non-crystalline raw material.

However, since none of the above-described copper slag, coal ash, basalt, and volcanic ash contain iron oxide in an amount in the range of 26% by mass or more and less than 40% by mass, those alone cannot constitute the inorganic composition of the invention.

For example, basalt contains silica, alumina, calcium oxide, and iron oxide as main components and is well known as a natural raw material that can be processed into fiber; however, the iron oxide content is 12% or less (if necessary, see Non-Patent Document 1), basalt alone cannot constitute the inorganic composition of the invention.

Similarly, coal ash also contains silica, alumina, calcium oxide, and iron oxide as main components and can serve as a raw material that can be processed into fiber; however, the iron oxide content is usually 20% by mass or less, and coal ash alone cannot constitute the inorganic composition of the invention.

However, since basalt and coal ash include iron oxide and include large amounts of silica, alumina, and calcium oxide, basalt and coal ash are extremely useful raw materials as supply sources for silica and alumina (silica alumina sources) necessary for constructing the inorganic composition of the invention.

A general composition of copper slag is considered to be 45% to 54% of iron oxide; 30% to 36% of silica; 3% to 6% of alumina; and 2% to 70 of calcium oxide and is non-crystalline.

However, as will be described below, since copper slag has too high an iron oxide content, a molten material thereof lacks melt spinnability, and copper slag alone cannot constitute the inorganic composition of the invention.

Nonetheless, copper slag is a useful iron oxide source (non-crystalline iron oxide source) rich in non-crystalline iron oxide components, which are essential and important for the inorganic composition of the invention.

Incidentally, although it is not economically efficient as described above, a raw material containing iron oxide as a component present in the largest amount (about 50 parts by mass) and additionally containing silica, alumina, and calcium oxide is melted and solidified at a high temperature in advance, and the resultant may be applied as a non-crystalline iron oxide source.

The invention has created an inorganic composition having excellent alkali resistance and excellent melt spinnability by formulating a silica alumina source having too low an iron oxide content when used alone, and a non-crystalline iron oxide source, unlikely to the silica alumina source, having too high an iron oxide content when used alone, such that the iron oxide content in the inorganic composition that is finally obtained is in the above-described range, and melting and solidifying the preparation.

The inorganic composition of the invention is not intended to exclude any incorporation of unavoidable impurities that are included in the raw materials. Examples of such impurities include $MgO$, $Na_2O$, $K_2O$, $TiO_2$, and $CrO_2$.

Since the inorganic composition of the invention has excellent melt spinnability, the inorganic composition can be processed into fibers by using existing glass fiber production facilities.

EFFECT OF THE INVENTION

Since the inorganic composition of the invention has excellent alkali resistance and excellent melt spinnability, the inorganic composition can be used in a variety of use applications after being processed into fibers and further subjected to secondary processing into woven fabrics, cloths, strand mats, and the like. In addition, coal ash discharged from coal-fired power plants can be effectively utilized as a main raw material. Furthermore, since copper slag can be used as a non-crystalline iron oxide source, the effective utilization ratio of industrial waste can be further increased.

BRIEF DESCRIPTION OF DRAWINGS

Fig. 1 is an explanatory diagram illustrating a summary of an evaluation test for melt spinnability of the inorganic composition of the present invention;
Fig. 2 is XRD patterns of copper slag (IC-1) and iron oxide (reagent) used in Examples and Comparative Examples;
Fig. 3 is an enlarged view (photomicrograph) of an example of fibers obtained by Examples;

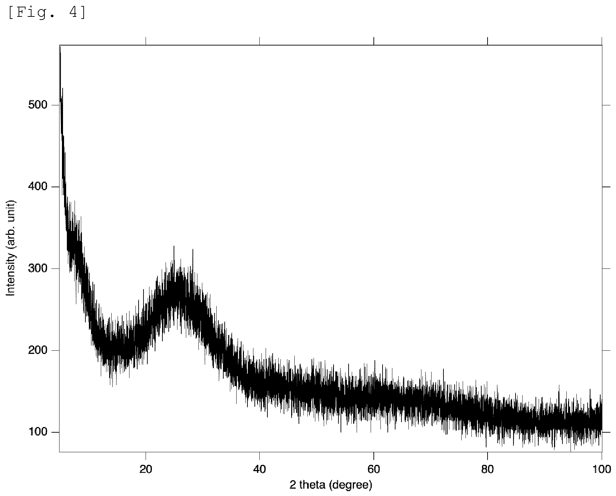

Fig. 4 is an XRD pattern of a fiber of Example 1; and
Fig. 5 is photographs showing a sample and a testing device used for an alkali resistance test.

MODE(S) FOR CARRYING OUT THE INVENTION

Hereinafter, in the Test Examples (Examples and Comparative Examples) of the present invention, the following reagents and raw materials were used.

<Reagents>

· Iron oxide (reagent)
· Silica (reagent)
· Alumina (reagent)
· Calcium oxide (reagent)

<Non-crystalline raw material>

· SA-1: IGCC slag
· SA-2: Coal ash produced from thermal power plants in Japan
· SA-3: Basalt
· SA-4: Sakurajima volcanic ash
· IC-1: Copper slag produced from copper smelters in Japan
· IC-2: Non-crystalline, high iron oxide-containing molten solidified product imitating copper slag (pseudo copper slag), prepared by the following procedure

The compositions of these raw materials are shown in Table 1. The composition analysis was based on fluorescent X-ray analysis. Incidentally, as a result of XRD analysis, it was verified that SA-1 to SA-4, IC-1, and IC-2 were all non-crystalline.

Meanwhile, from a similar analysis test, it was found that the iron oxide of the reagent included a crystalline component.

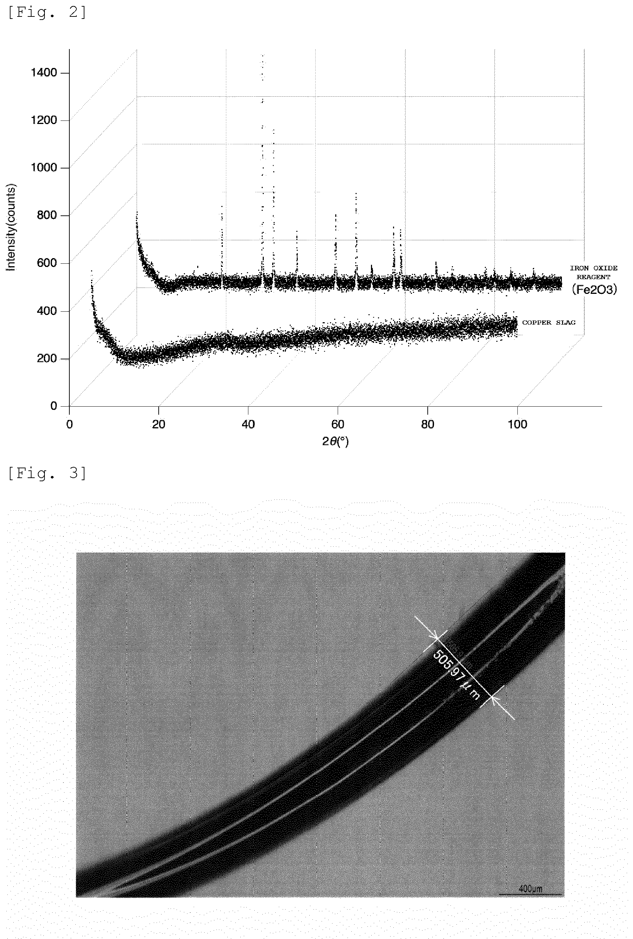

Fig. 2 shows XRD patterns of iron oxide (reagent) and IC-1 (copper slag).

In addition to this, the silica (reagent), alumina (reagent), and calcium oxide (reagent) are all crystalline.

Incidentally, the above-described pseudo copper slag (IC-2) was obtained by weighing 50 parts by mass of iron oxide, 33 parts by mass of silica, 5 parts by mass of alumina, and 12 parts by mass of calcium oxide from the above-described reagents, finely pulverizing the substances in a mortar to obtain a mixture, transferring the mixture into a crucible, maintaining the mixture at a temperature of 1700°C to 2200°C for about 8 hours using an electric furnace and a gas furnace, and solidifying the molten material in water.

Incidentally, among the non-crystalline raw materials, SA-1 to SA-4 are good-quality silica alumina sources, in each of which the total content of silica and alumina present in the raw material is 60% by mass or more.

On the other hand, IC-1 and IC-2 are good-quality non-crystalline iron oxide sources, in each of which the content of iron oxide present in the raw material is 50% by mass or more.

As shown in Table 1, SA-1 to SA-4, IC-1, and IC-2 all have a total content of silica, alumina, calcium oxide, and iron oxide of 90% by mass or more.

In the following table, the content of iron oxide ($Fe_2O_3$) is abbreviated to [F], the content of silica ($SiO_2$) to [S], the content of alumina ($Al_2O_3$) to [A], and the content of calcium oxide ($CaO$) to [C].

[Table 1]

| Class | | Silica alumina source | | | | Non-crystalline iron oxide source | |
|---|---|---|---|---|---|---|---|
| Abbreviation | | SA-1 | SA-2 | SA-3 | SA-4 | IC-1 | IC-2 |
| Profile | | IGCC slag | Fly ash | Basalt | Sakurajima volcanic ash | Copper slag | Pseudo copper slag |
| Oxide abundance ratio [% by mass] | $Fe_2O_3$ [F] | 9 | 9 | 19 | 18 | 55 | 50 |
| | $SiO_2$ [S] | 54 | 62 | 46 | 49 | 35 | 33 |
| | $Al_2O_3$ [A] | 11 | 18 | 11 | 11 | 5 | 5 |
| | CaO [C] | 17 | 3 | 17 | 12 | 2 | 12 |
| | Others | 9 | 8 | 6 | 10 | 3 | 0 |

Prior to performing a series of alkali resistance tests, tests for melt spinnability and alkali resistance of the raw materials themselves, that is, the silica alumina sources and the non-crystalline iron oxide sources, were performed.

<Melt spinnability test>

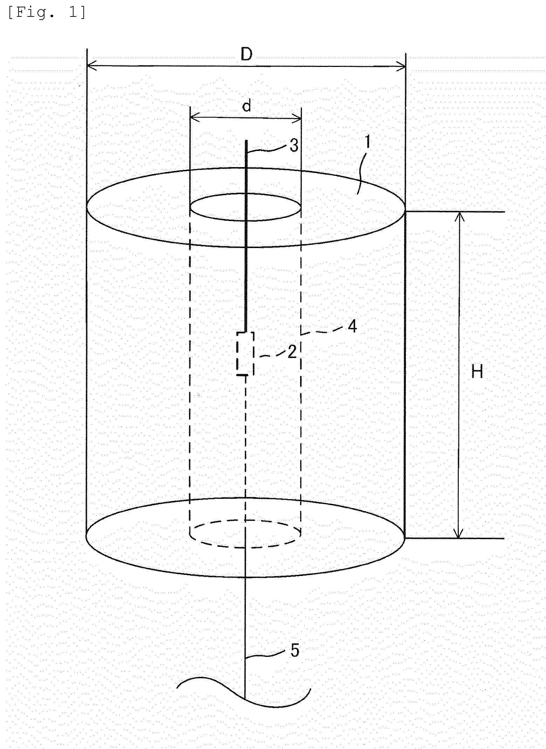

An evaluation of a melt spinnability test (hereinafter, simply described briefly as "spinnability test") was performed by using an electric furnace. An outline of the test is shown in Fig. 1. In Fig. 1, an electric furnace (1) has a height (H) of 60 cm and an outer diameter (D) of 50 cm and includes an opening part (4) with a diameter (d) of 10 cm at the center thereof. On the other hand, 30 g of a blend is charged into a Tammann tube (2) having an inner diameter ($\phi$) of 2.1 cm and a length of 10 cm. Incidentally, a hole with a diameter of 2 mm is opened at the center of the bottom part of the Tammann tube (2). During a melting test, the Tammann tube (2) is held at a predetermined position within the opening part (4) of the electric furnace by a hanging rod (3).

When the blend is melted by heating, the molten material flows and falls through the bottom part of the Tammann tube due to gravity and is solidified when exposed to external air to become a thread (fiber).

In the electric furnace, the temperature is raised by a predetermined temperature raising program, and the highest attainable temperature of the internal temperature of the furnace is set to 1350°C. At this time, it has been confirmed in advance that the temperature inside the Tammann tube (molten material) follows the internal temperature of the furnace at a temperature approximately lower by 50°C.

In the invention, as an index for the evaluation of melt spinnability, a case in which the molten material flows and falls to form a thread by the time the internal temperature of the furnace reaches 1350°C, that is, a case in which the melting temperature of a sample is 1300°C or lower, while the molten material has a melt viscosity appropriate for forming a thread (fiber), was considered as an acceptable level. According to the melting behavior of the sample, the melt spinnability was ranked in the following three stages from A to C.

A: The sample forms a thread (fiber).
B: Because melting of the sample is not initiated, or the molten material is highly viscous, nothing comes out through the bottom part of the Tammann tube.
C: The sample melts; however, the viscosity of the molten material is so low that the sample merely drips as liquid droplets, and no thread (fiber) is formed.

<Alkali resistance test>

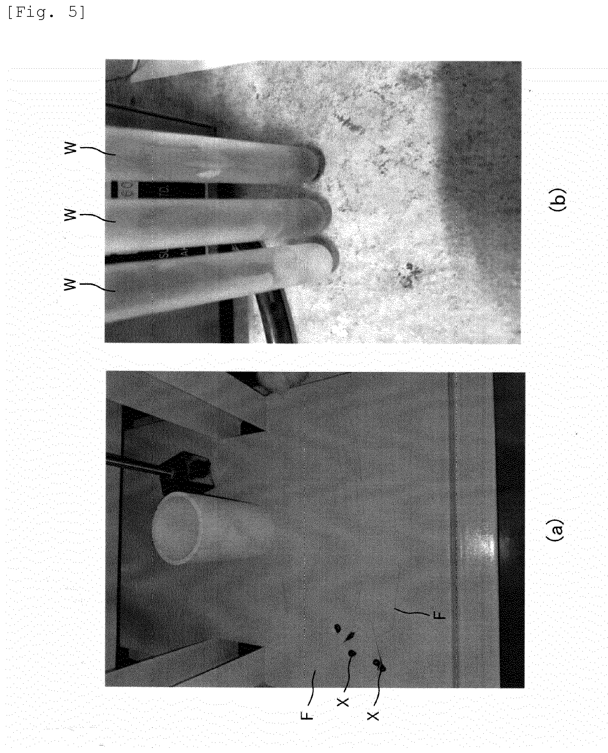

During the spinnability test, when the inorganic composition is melted and solidified, a fiber accompanied by an ellipsoidal-shaped solidified material at the tip, or a simple ellipsoidal-shaped solidified material is formed (black solidified material (X) in Fig. 5(a)). Separately, a 10% by mass NaOH solution (pH about 13) was prepared and introduced into a test tube (W), the solidified material (weight W1) was immersed therein as a sample, and the test tube (W) was kept heated at 90°C with a sand heater, which was continued for 30 days. Thereafter, the sample was collected using a mesh, and the weight after drying (W2) was measured. The weight reduction ratio (%) was calculated by the following Formula (1).

$$\text{Weight reduction ratio (\%)} = (1 - W2/W1) \times 100 \quad \ldots \quad (1)$$

The results of the melt spinnability and alkali resistance tests of the raw materials, that is, the silica alumina sources and the non-crystalline iron oxide sources, obtained by the above-described procedure are shown in Table 2.
From this, it was verified that fibers were obtained by using coal ash and basalt as raw materials, as known in the conventional technologies. In addition, it was also verified that the alkali resistance was at the level indicated in Table 2. From a comparison of the absolute values of alkali resistance of SA-1 and SA-3, a tendency was shown that as the iron oxide content in the inorganic composition is higher, the alkali resistance is improved.
On the other hand, fibers could not be obtained from the copper slag and the pseudo copper slag; however, the alkali resistance of the molten solidified products was extremely high (weight reduction was 0.00% for both). These results suggested that by increasing the iron oxide content in the inorganic composition, it is possible to create a fiber that is superior to existing fly ash fibers and basalt fibers.

[Table 2]

| Class | | | Silica alumina source | | Non-crystalline iron oxide source | |
|---|---|---|---|---|---|---|
| Abbreviation | | | SA-1 | SA-3 | IC-1 | IC-2 |
| Profile | | | IGCC slag | Basalt | Copper slag | Pseudo copper slag |
| Oxide abundance ratio [% by mass] | | $Fe_2O_3$ [F] | 9 | 19 | 55 | 50 |
| | | $SiO_2$ [S] | 54 | 46 | 35 | 33 |
| | | $Al_2O_3$ [A] | 11 | 11 | 5 | 5 |
| | | CaO [C] | 17 | 17 | 2 | 12 |
| | | Others | 9 | 6 | 3 | 0 |
| Characteristics | | Evaluation of non-crystallinity | Non-crystalline A | Non-crystalline A | Non-crystalline | Non-crystalline |
| | | Melt spinnability | | | C | C |
| | | Alkali resistance (weight reduction ratio, %) | 4.86 | 2.80 | 0.00 | 0.00 |

[Example 1]

Referring to the knowledge obtained from the above-described preliminary tests, 20 parts by mass of SA-2, 20 parts by mass of SA-3, and 30 parts by mass of SA-4 as the silica alumina sources, and 30 parts by mass of IC-1 as an iron oxide source were used as raw materials, so that the iron oxide content in the final composition was higher than that of the IGCC slag (SA-1) or the basalt (SA-3). The oxide abundance ratio in the raw materials (oxide composition ratio of the final inorganic composition) is iron oxide: 28% by mass, silica: 47% by mass, alumina: 11% by mass, calcium oxide: 9% by mass, and others: 5% by mass. The iron oxide component was all derived from a non-crystalline raw material. In addition, the sum of silica and alumina present in the composition is 58% by mass, and the ratio of alumina with respect to the sum of silica and alumina is 0.19. Melt spinning of the raw material was attempted by a procedure similar to that of the above-described preliminary test, and as a result, a fiber was obtained (Fig. 3). The molten solidified product was non-crystalline. Furthermore, the alkali resistance of the molten solidified product was also excellent (weight reduction ratio was 0.00%). The results are shown in Table 3.

Incidentally, for a comparison, the evaluation results for SA-1 in the preliminary test are reposted as Comparative Example 1, and the evaluation results for SA-3 are reposted as Comparative Example 2.

[Comparative Example 3]

66 parts by mass of SA-2, 8 parts by mass of iron oxide (reagent), 9 parts by mass of silica (reagent), and 15 parts by mass of calcium oxide (reagent) were weighed, a spinnability test was performed in the same manner as in Example 1, and a fiber was obtained. As a result of XRD analysis, crystal peaks were observed. As a result of an alkali resistance test, the weight reduction ratio was 0.20%. The results are shown in Table 3.

[Comparative Examples 4 and 5]

In an attempt to improve the alkali resistance, the blending ratio of SA-2, iron oxide (reagent), silica (reagent), and calcium oxide (reagent) was changed so as to increase the iron oxide content in the composition of Comparative Example 3, and a similar test was performed (Comparative Examples 4 and 5). The results are shown in Table 3 together with the raw material blending ratio, the oxide composition ratio, the sum of silica and alumina in the composition, and the ratio of alumina with respect to the sum of silica and alumina. As a result, in both Comparative Examples 4 and 5, satisfactory fibers were obtained; however, contrary to the expectation, the alkali resistance was rather deteriorated despite that the iron oxide content was higher than that of Comparative Example 3. Incidentally, the molten solidified product was non-crystalline.

Comparative Examples 3 to 5 implied that when iron oxide (reagent, crystalline) is included in the raw material, even when the inorganic composition that is finally obtained is non-crystalline, the alkali resistance decreases.

[Example 2]

Raw materials were formulated in the same manner as in Example 1, except that IC-2 was used instead of the non-crystalline iron oxide source IC-1, and a spinnability test was performed in the same manner as in Example 1. As a result, a fiber was obtained. The molten solidified product was non-crystalline. As a result of an alkali resistance test, the weight reduction ratio was 0.00%. The results are shown in Table 3.

[Table 3]

| | | Comparative Example 1 | Comparative Example 2 | Example 1 | Comparative Example 3 | Comparative Example 4 | Comparative Example 5 | Example 2 |
|---|---|---|---|---|---|---|---|---|
| Raw material blending ratio [parts by mass] | IGCC (SA-1) | 100 | - | - | - | - | - | |
| | Fly ash (SA-2) | - | - | 20 | 66 | 57 | 57 | 20 |
| | Basalt (SA-3) | - | 100 | 20 | - | - | - | 20 |
| | Volcanic ash (SA-4) | - | - | 30 | - | - | - | 30 |
| | Copper slag (IC-1) | - | - | 30 | - | - | - | |
| | Pseudo copper slag (IC-2) | - | - | - | - | - | - | 30 |
| | $Fe_2O_3$ (reagent) | - | - | - | 8 | 18 | 23 | - |
| | $SiO_2$ (reagent) | - | - | - | 9 | 7 | 7 | - |
| | CaO (reagent) | | | | 15 | 15 | 10 | |
| Oxide abundance ratio [% by mass] | $Fe_2O_3$ [F] | 9 | 19 | 28 | 14 | 23 | 28 | 26 |
| | $SiO_2$ [S] | 54 | 46 | 47 | 50 | 43 | 47 | 46 |
| | $Al_2O_3$ [A] | 11 | 11 | 11 | 12 | 11 | 11 | 11 |
| | CaO [C] | 17 | 17 | 9 | 17 | 17 | 12 | 11 |
| | Others | 9 | 6 | 5 | 6 | 6 | 5 | 6 |
| Content of iron oxide derived from non-crystalline raw material [% by mass] | | 9 | 19 | 28 | 6 | 5 | 5 | 26 |
| Sum of silica and alumina in composition ([S]+[A], % by mass) | | 65 | 57 | 58 | 63 | 54 | 58 | 57 |
| Ratio of alumina present in sum of silica and alumina [A]/([S]+[A]) | | 0.17 | 0.19 | 0.19 | 0.20 | 0.20 | 0.19 | 0.19 |

| Characteristics | | Comparative Example 1 | Comparative Example 2 | Example 1 | Comparative Example 3 | Comparative Example 4 | Comparative Example 5 | Example 2 |
|---|---|---|---|---|---|---|---|---|
| | Melt spinnability | A | A | A | A | A | A | A |
| | Non-crystallinity | Non-crystalline | Non-crystalline | Non-crystalline | Non-crystalline | Non-crystalline | Non-crystalline | Non-crystalline |
| | Alkali resistance (weight reduction ratio, %) | 4.86 | 2.80 | 0.00 | 0.20 | 7.90 | 4.72 | 0.00 |

EP 4 321 492 A1

[Example 3]

A spinnability test was performed in the same manner as in Example 1, except that 50 parts by mass of SA-1 as a silica alumina source and 50 parts by mass of IC-1 as a non-crystalline iron oxide source were used as raw materials. In the present Example, the iron oxide content in the raw material (iron oxide content in the final inorganic composition) was 32% by mass, and the iron oxide component was all derived from a non-crystalline raw material. As a result of the spinnability test, a fiber was obtained. The molten solidified product was non-crystalline. As a result of an alkali resistance test, the weight reduction ratio was 0.00%. The results are shown in Table 4.
Incidentally, for reference, Comparative Example 1 is reposted in Table 4.

[Example 4]

A test was performed in the same manner as in Example 3, except that IC-2 was used instead of IC-1. In the present Example, the iron oxide content in the raw material (iron oxide content in the final inorganic composition) was 30% by mass, and the iron oxide component was all derived from a non-crystalline raw material. As a result of a spinnability test, a fiber was obtained. The molten solidified product was non-crystalline. As a result of an alkali resistance test, the weight reduction ratio was 0.00%. The results are shown in Table 4.

[Example 5]

A spinnability test was performed in the same manner as in Example 4, except that 37 parts by mass of SA-1 and 63 parts by mass of IC-2 were used. In the present Example, the iron oxide content in the raw material (iron oxide content in the final inorganic composition) was 35% by mass, and the iron oxide component was all derived from a non-crystalline raw material. As a result of the spinnability test, a satisfactory fiber was obtained. The molten solidified product was non-crystalline. As a result of an alkali resistance test, the weight reduction ratio was 0.00%. The results are shown in Table 4.

[Comparative Example 6]

A spinnability test was performed in the same manner as in Example 4, except that 25 parts by mass of SA-1 and 75 parts by mass of IC-2 were used. In the present Example, the iron oxide content in the raw material (iron oxide content in the final inorganic composition) was 40% by mass, and the iron oxide component was all derived from a non-crystalline raw material. As a result of the spinnability test, the molten material merely dripped from the crucible, and a fiber was not obtained. The molten solidified product was non-crystalline. Incidentally, the alkali resistance of the molten solidified product was favorable (weight reduction ratio 0.00%). The results are shown in Table 4.

[Comparative Example 7]

A spinnability test was performed in the same manner as in Example 4, except that 12 parts by mass of SA-1 and 88 parts by mass of IC-2 were used. In the present Example, the iron oxide content in the raw material (iron oxide content in the final inorganic composition) was 45% by mass, and the iron oxide component was all derived from a non-crystalline raw material. As a result of the spinnability test, the molten material merely dripped from the crucible, and a fiber was not obtained. The molten solidified product was non-crystalline. Incidentally, the alkali resistance of the molten solidified product was favorable (weight reduction ratio 0.00%). The results are shown in Table 4.
From Table 4, it was found that the iron oxide components derived from non-crystalline raw materials contribute to improvement of the alkali resistance of the inorganic composition; however, when the content thereof is 40% by mass or more, the melt spinnability is deteriorated.

[Table 4]

| | | Comparative Example 1 (reposted) | Example 3 | Example 4 | Example 5 | Comparative Example 6 | Comparative Example 7 |
|---|---|---|---|---|---|---|---|
| Raw material blending ratio [parts by mass] | IGCC (SA-1) | 100 | 50 | 50 | 37 | 25 | 12 |
| | Fly ash (SA-2) | - | - | - | - | - | - |
| | Basalt (SA-3) | - | - | - | - | - | - |
| | Volcanic ash (SA-4) | - | - | - | - | - | - |
| | Copper slag (IC-1) | - | 50 | - | - | - | - |
| | Pseudo copper slag (IC-2) | - | - | 50 | 63 | 75 | 88 |
| | $Fe_2O_3$ (reagent) | - | - | - | - | - | - |
| | $SiO_2$ (reagent) | - | - | - | - | - | - |
| | CaO (reagent) | - | - | - | - | - | - |
| Oxide abundance ratio [% by mass] | $Fe_2O_3$ [F] | 9 | 32 | 30 | 35 | 40 | 45 |
| | $SiO_2$ [S] | 54 | 45 | 44 | 41 | 38 | 36 |
| | $Al_2O_3$ [A] | 11 | 8 | 8 | 7 | 7 | 6 |
| | CaO [C] | 17 | 10 | 15 | 14 | 13 | 13 |
| | Others | 9 | 5 | 3 | 3 | 2 | 1 |
| Content of iron oxide derived from non-crystalline raw material [% by mass] | | 9 | 32 | 30 | 35 | 40 | 45 |
| Sum of silica and alumina in composition ([S]+[A], % by mass) | | 65 | 53 | 52 | 48 | 45 | 41 |
| Ratio of alumina present in sum of silica and alumina [A]/([S]+[A]) | | 0.17 | 0.15 | 0.15 | 0.15 | 0.15 | 0.14 |
| Characteristics | Melt spinnability | A | A | A | A | C | C |
| | Non-crystallinity | Non-crystalline | Non-crystalline | Non-crystalline | Non-crystalline | Non-crystalline | Non-crystalline |
| | Alkali resistance (weight reduction ratio, %) | 4.86 | 0.00 | 0.00 | 0.00 | 0.00 | 0.00 |

[Example 6]

A spinnability test was performed in the same manner as in Example 1, except that 20 parts by mass of SA-2, 20 parts by mass of SA-3, and 30 parts by mass of SA-4 as silica alumina sources, and 30 parts by mass of IC-2 instead of the non-crystalline iron oxide source IC-1 were used as raw materials. In the present Test Example, the iron oxide content in the raw materials (iron oxide content in the final inorganic composition) was 26% by mass, and the iron oxide component was all derived from non-crystalline raw materials. As a result of the spinnability test, a fiber was obtained. The molten solidified product was non-crystalline. As a result of an alkali resistance test, the weight reduction ratio was 0.00%. The results are shown in Table 5.

Incidentally, for reference, Comparative Example 2 is reposted in Table 5.

[Example 7]

A spinnability test was performed in the same manner as in Example 1, except that 65 parts by mass of SA-3 as a silica alumina source and 35 parts by mass of IC-2 as a non-crystalline iron oxide source were used as raw materials. In the present Test Example, the iron oxide content in the raw material (iron oxide content in the final inorganic composition) was 30% by mass, and the iron oxide component was all derived from a non-crystalline raw material. As a result of the spinnability test, a fiber was obtained. The molten solidified product was non-crystalline. As a result of an alkali resistance test, the weight reduction ratio was 0.00%. The results are shown in Table 5.

[Example 8]

A spinnability test was performed in the same manner as in Example 7, except that 50 parts by mass of SA-3 and 50 parts by mass of IC-2 were used. In the present Test Example, the iron oxide content in the raw material (iron oxide content in the final inorganic composition) was 35% by mass, and the iron oxide component was all derived from a non-crystalline raw material. As a result of the test, a fiber was obtained. The molten solidified product was non-crystalline. As a result of an alkali resistance test, the weight reduction ratio was 0.00%. The results are shown in Table 5.

[Comparative Example 8]

A spinnability test was performed in the same manner as in Example 7, except that 30 parts by mass of SA-3 and 70 parts by mass of IC-2 were used. In the present Test Example, the iron oxide content in the raw material (iron oxide content in the final inorganic composition) was 41% by mass, and the iron oxide component was all derived from a non-crystalline raw material. As a result of the spinnability test, the molten material merely dripped from the crucible, and a fiber was not obtained. The molten solidified product was non-crystalline. Incidentally, the alkali resistance of the molten solidified product was favorable (weight reduction ratio 0.00%). The results are shown in Table 5.

[Comparative Example 9]

A spinnability test was performed in the same manner as in Example 7, except that 15 parts by mass of SA-3 and 85 parts by mass of IC-2 were used. In the present Test Example, the iron oxide content in the raw material (iron oxide content in the final inorganic composition) was 45% by mass, and the iron oxide component was all derived from a non-crystalline raw material. As a result of the spinnability test, the molten material merely dripped from the crucible, and a fiber was not obtained. The molten solidified product was non-crystalline. Incidentally, the alkali resistance of the molten solidified product was favorable (weight reduction ratio 0.00%). The results are shown in Table 5.

From Table 5, even when basalt was used as a raw material instead of IGCC slag, results similar to those in Table 4 were obtained.

[Table 5]

| | | Example 6 | Comparative Example 2 | Example 7 | Example 8 | Comparative Example 8 | Comparative Example 9 |
|---|---|---|---|---|---|---|---|
| Raw material blending ratio [parts by mass] | IGCC (SA-1) | - | - | - | - | - | - |
| | Fly ash (SA-2) | 20 | - | - | - | - | - |
| | Basalt (SA-3) | 20 | 100 | 65 | 50 | 30 | 15 |
| | Volcanic ash (SA-4) | 30 | - | - | - | - | - |
| | Copper slag (IC-1) | - | - | - | - | - | - |
| | Pseudo copper slag (IC-2) | 30 | - | 35 | 50 | 70 | 85 |
| | $Fe_2O_3$ (reagent) | - | - | - | - | - | - |
| | $SiO_2$ (reagent) | - | - | - | - | - | - |
| | CaO (reagent) | - | - | - | - | - | - |
| Oxide abundance ratio [% by mass] | $Fe_2O_3$ [F] | 26 | 19 | 30 | 35 | 41 | 45 |
| | $SiO_2$ [S] | 46 | 46 | 41 | 40 | 37 | 35 |
| | $Al_2O_3$ [A] | 11 | 11 | 9 | 8 | 7 | 6 |
| | CaO [C] | 11 | 17 | 15 | 15 | 14 | 13 |
| | Others | 6 | 6 | 4 | 3 | 2 | 1 |
| Content of iron oxide derived from non-crystalline raw material [$ by mass] | | 26 | 19 | 30 | 35 | 41 | 45 |
| Sum of silica and alumina in composition ([S]+[A], % by mass) | | 57 | 57 | 50 | 48 | 44 | 41 |
| Ratio of alumina present in sum of silica and alumina [A]/([S]+[A]) | | 0.19 | 0.19 | 0.18 | 0.17 | 0.16 | 0.14 |
| Characteristics | Melt spinnability | A | A | A | A | C | C |
| | Non-crystallinity | Non-crystalline | Non-crystalline | Non-crystalline | Non-crystalline | Non-crystalline | Non-crystalline |
| | Alkali resistance (weight reduction ratio, %) | 0.00 | 2.80 | 0.00 | 0.00 | 0.00 | 0.00 |

13

[Example 9]

50 parts by mass of IC-1 (copper slag), 28 parts by mass of silica (reagent), 7 parts by mass of alumina (reagent), and 15 parts by mass of calcium oxide (reagent) were weighed and pulverized in a mortar to be used as a raw material. Here, the oxide composition of the raw material includes 28% by mass of iron oxide, 46% by mass of silica, 10% by mass of alumina, 16% by mass of calcium oxide, and 2% by mass of others. The iron oxide content in the raw material (iron oxide content in the final inorganic composition) is all derived from copper slag, that is, derived from a non-crystalline raw material. On the other hand, the other oxides, that is, silica, alumina, and calcium oxide are reagents (crystalline). A raw material formulated in this way was subjected to a spinnability test, and as a result, a fiber was obtained. The molten solidified product was non-crystalline. Incidentally, the alkali resistance of the molten solidified product was favorable (weight reduction ratio 0.00%).

In the present Example, it can be seen that as long as the iron oxide component is derived from a non-crystalline raw material, silica, alumina, and calcium oxide may all include components derived from crystalline raw materials. That is, it is clear that it is important for the iron oxide component in the inorganic composition to be derived from a non-crystalline raw material in view of improving the alkali resistance.

From a comparison of Examples 1 to 9 and Comparative Examples 1 to 9, it is clear that with regard to a non-crystalline inorganic composition containing silica, iron oxide, alumina, and calcium oxide as main components, when the iron oxide component is derived from a non-crystalline raw material, and the content of the iron oxide component is set to be 26% by mass or more and less than 40 mass, an inorganic composition having excellent alkali resistance and a fiber thereof are obtained.

INDUSTRIAL APPLICABILITY

Since the inorganic composition of the present invention has excellent alkali resistance, in addition to being used as aggregate, the inorganic composition can be further subjected to fiber processing and produced into an alkali-resistant inorganic fiber for concrete reinforcement.

**Claims**

1. A non-crystalline inorganic composition comprising silica, alumina, iron oxide, and calcium oxide as essential components,
   wherein

   i) a total content of silica, alumina, and calcium oxide is 50% by mass or more and 75% by mass or less;
   ii) a content of iron oxide is 26% by mass or more and less than 40% by mass; and
   iii) the iron oxide is derived from a non-crystalline raw material containing silica, alumina, calcium oxide, and iron oxide.

2. The inorganic composition according to claim 1, wherein a total content of silica, alumina, calcium oxide, and iron oxide in the non-crystalline raw material is 80% by mass or more.

3. The non-crystalline inorganic composition according to claim 1 or 2, wherein the non-crystalline raw material includes copper slag.

4. The non-crystalline inorganic composition according to any one of claims 1 to 3, wherein the non-crystalline raw material further includes one or more of coal ash, basalt, or volcanic ash in addition to copper slag.

5. A fiber formed from the non-crystalline inorganic composition according to claim 4.

6. Concrete filled with the fiber according to claim 5.

[Fig. 1]

[Fig. 2]

[Fig. 3]

[Fig. 4]

[Fig. 5]

**EP 4 321 492 A1**

# INTERNATIONAL SEARCH REPORT

| International application No. |
|---|
| **PCT/JP2022/017119** |

**A. CLASSIFICATION OF SUBJECT MATTER**

*C03C 3/087*(2006.01)i; *B09B 3/40*(2022.01)i; *C03C 13/06*(2006.01)i; *C04B 14/42*(2006.01)i
FI: C03C3/087; B09B3/40; C03C13/06; C04B14/42 A

According to International Patent Classification (IPC) or to both national classification and IPC

**B. FIELDS SEARCHED**

Minimum documentation searched (classification system followed by classification symbols)

C03C1/00-14/00; C04B14/38-14/48

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 63-2841 A (OUTOKUMPU OY) 07 January 1988 (1988-01-07)<br>claims, p. 1, lower right column, line 15 to p. 2, upper left column, line 4, p. 3, upper left column, line 2 to upper right column, line 7, p. 4, upper left column, lines 6-10 | 1-6 |
| A | WO 2020/218356 A1 (NIPPON FIBER CORP.) 29 October 2020 (2020-10-29)<br>claims, paragraphs [0015]-[0018], [0041], [0042] | 1-6 |
| A | CN 106698914 A (SHENYANG RESEARCH INSTITUTE OF NONFERROUS METALS)<br>24 May 2017 (2017-05-24)<br>claims | 1-6 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 June 2022** | **28 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/017119**

| Patent document cited in search report | | | Publication date (day/month/year) | Patent family member(s) | Publication date (day/month/year) |
|---|---|---|---|---|---|
| JP | 63-2841 | A | 07 January 1988 | US 4818289 A claims, description, column 1, lines 7-17, column 2, line 42 to column 3, line 2 | |
| WO | 2020/218356 | A1 | 29 October 2020 | (Family: none) | |
| CN | 106698914 | A | 24 May 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018008513 A

**Non-patent literature cited in the description**

- *International Journal of Textile Science,* 2012, vol. 1 (4), 19-28